# FASCICULE DE BREVET EUROPEEN

(11) **EP 1 920 909 B1**
(45) Date de publication et mention de la délivrance du brevet: **31.08.2011**
(21) Numéro de dépôt: 07119155.5
(22) Date de dépôt: 24.10.2007
(51) Int. Cl.: B29C 70/48, B29C 70/54

(54) **Procédé de fabrication d'une aube témoin en materiau composite**
Verfahren zur Herstellung einer Referenzlaufradschaufel aus Verbundstoff
Method of producing a reference vane from a composite material

(30) Priorité: 26.10.2006 FR 0654540
(43) Date de publication de la demande: 14.05.2008
(73) Titulaire: SNECMA, 75015 Paris (FR)
(72) Inventeur: Romero, Jean-Louis, 77000 Mellun (FR); Wozniak, Myriam, 77310 Boissise le Roi 77310 (FR)
(74) Mandataire: Barbin le Bourhis, Joël

(56) Documents cités:
- EP-A- 1 526 285
- US-A1- 2004 034 298
- PFEIFER: "Computed Tomography of Advanced Composite Materials" ADVANCED COMPOSITES, 4 décembre 1985 (1985-12-04), pages 177-188, XP008079948 Dearborn, Michigan, USA

## Description

L'invention se rapporte au contrôle non destructif, par tomographie, d'une aube de turbomachine en matériau composite, plus particulièrement une aube comprenant une armature tissée en trois dimensions. Elle concerne plus particulièrement la réalisation d'une aube témoin pour l'étalonnage du système tomographique appelé à contrôler systématiquement de telles aubes, en fabrication. Les aubes en matériau composite ainsi contrôlées peuvent être, notamment, les aubes de la soufflante d'un turboréacteur.

Les aubes d'une soufflante d'un turboréacteur à double flux peuvent être en matériau composite, c'est-à-dire constituées de fibres synthétiques enrobées de résine. On cherche à réaliser un contrôle non destructif et systématique de ces aubes. Les matériaux utilisés ont conduit à retenir la tomographie aux rayons X comme procédé de contrôle non destructif le plus adapté.

Par exemple, le document US 6 041 132 décrit un contrôle non destructif par tomographie d'une telle aube de soufflante. Le processus de reconstruction tomographique est lié à la structure de la masse fibreuse, en l'occurrence constituée de plis d'un matériau en ruban. Selon ce document, la reconstruction tomographique est adaptée en fonction de ces plis. Plus précisément, au moins un pli de référence d'un modèle de référence est mémorisé dans un système de coordonnées non euclidien puis, lors du contrôle d'une aube réelle, on transforme les points du pli de référence en système de coordonnées euclidien de l'objet réel. Cette double transformation permet de mieux faire apparaître des défauts qui sont spécifiques à ce type d'aubes dont la masse fibreuse est constituée de plis d'un matériau en ruban, notamment la formation de rides.

L'invention concerne le contrôle non destructif par tomographie d'un autre type d'aube comprenant une ébauche ou préforme réalisée en fils ou fibres tissées en trois dimensions. Une telle ébauche est noyée dans la résine. Par exemple, le brevet EP 1 526 285 appartenant à la demanderesse décrit une aube de ce genre.

Au cours du processus de fabrication de ce type d'aube, différents défauts peuvent apparaître. On utilise un contrôle non destructif par tomographie pour détecter et évaluer ces défauts.

Un défaut spécifique est la formation d'amas de résine au sein de la structure. Pour détecter et évaluer ces défauts, il faut procéder régulièrement à un étalonnage de l'installation tomographique, à l'aide d'une aube témoin comportant notamment de tels amas de résines, de dimensions connues et situées en des emplacements connus.

L'invention concerne la réalisation d'une telle aube témoin.

Plus particulièrement, l'invention concerne un procédé de fabrication d'une aube témoin en matériau composite pour étalonnage d'un contrôle radiologique, d'aubes semblables, caractérisé en ce qu'il consiste à réaliser une ébauche tridimensionnelle tissée en fibres de matériau synthétique, à introduire des éléments en résine à l'état solide à des emplacements prédéterminés de ladite ébauche, à introduire ladite ébauche dans un moule et à injecter de la résine sous pression dans ledit moule pour obtenir ladite aube témoin.

Très préférentiellement, l'aube témoin est destinée à l'étalonnage d'une installation de tomographie.

Les éléments en résine à l'état solide peuvent avoir une forme géométrique prédéterminée. Par exemple, on peut utiliser des billes de forme sensiblement sphérique.

Pour simuler des amas de résines plus ou moins importants, on peut utiliser des éléments en résine de dimensions différentes, par exemple des billes ayant des diamètres différents choisis. Pratiquement, des billes dont le diamètre est compris entre 2 et 10 mm ont été expérimentées avec succès.

Lors des recherches ayant abouti à l'invention, on s'est aperçu que, de façon surprenante, l'injection de résine liquide sous pression et le traitement ultérieur à température élevée ne modifiait pas sensiblement les positions et l'intégrité des éléments en résine solide préintroduits dans l'ébauche tissée avant injection de la résine liquide.

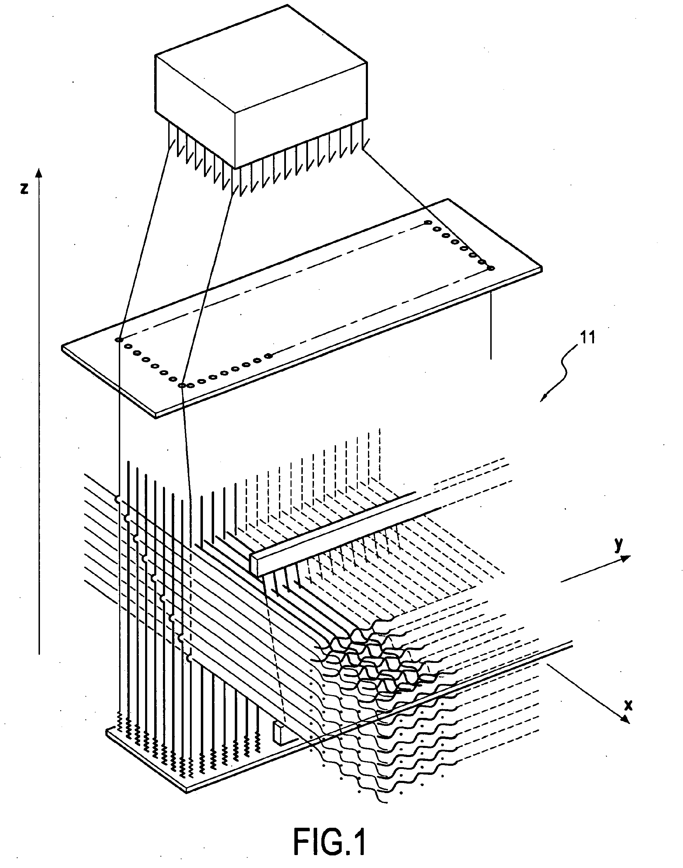

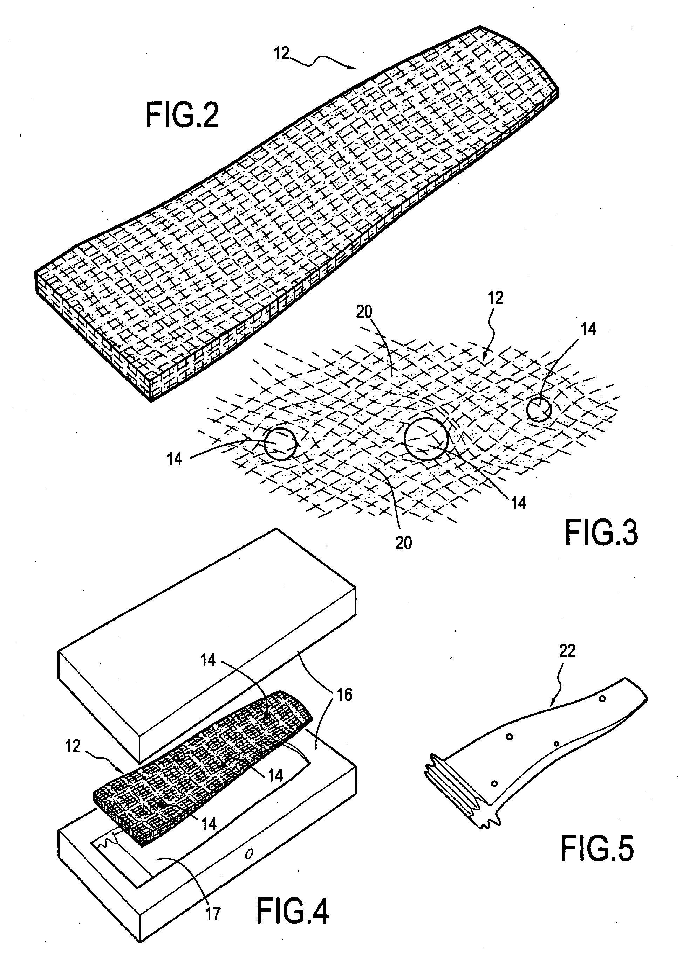

L'invention sera mieux comprise et d'autres avantages de celle-ci apparaîtront plus clairement à la lumière de la description qui va suivre d'un procédé de fabrication d'une aube témoin conforme à son principe, donnée uniquement à titre d'exemple et faite en référence aux dessins annexés dans lesquels :
- la figure 1 illustre le tissage en trois dimensions de l'ébauche tridimensionnelle ;
- la figure 2 est une représentation schématique de l'ébauche ainsi obtenue ;
- la figure 3 illustre l'insertion des éléments en résine à l'état solide dans ladite ébauche ;
- la figure 4 illustre l'enrobage de l'ébauche par de la résine liquide injectée sous pression dans un moule ; et
- la figure 5 illustre l'aube témoin ainsi obtenue.
   En se référant aux dessins, on a schématisé un procédé de fabrication d'une aube témoin comportant une phase de réalisation d'une ébauche tridimensionnelle tissée, en fibres de matériaux synthétiques, à l'aide d'un métier à tisser 11 schématisé à la figure 1. Une étape de ce genre a été décrite dans EP 1 526 285 et ne sera pas décrite à nouveau. L'invention s'applique néanmoins à tout type de tissage en trois dimensions susceptible de matérialiser une ébauche 12 comme celle de la figure 2. Les fibres utilisées sont de préférence des fibres de carbone. On pourrait aussi utiliser des fibres de verre ou d'aramide.
   L'étape suivante, schématisée à la figure 3, consiste à insérer des éléments en résine 14 à l'état solide, ici des billes sphériques, à des emplacements choisis de l'ébauche. On établit parallèlement une cartographie de ces implantations tout en mémorisant les diamètres des billes insérées aux différents emplacements.
   L'ébauche 12 ainsi traitée est placée dans un moule 16 comportant l'empreinte de l'aube témoin souhaitée, semblable dans sa forme et ses dimensions au type d'aube qui sera soumis au contrôle non destructif par tomographie. Puis de la résine à l'état liquide est injectée sous pression dans le moule. Ce dernier peut être chauffé à une température favorisant la polymérisation de la résine. La maîtrise de tous ces paramètres est à la portée de l'homme du métier.
   A titre d'exemple, on peut utiliser une résine époxy (connue sous l'appellation PR 520) qui a été utilisée avec succès. De nombreuses autres résines thermodurcissables peuvent être utilisées, notamment d'autres résines époxy, des résines de polyester, des résines phénoliques, etc...
   Pour la phase de moulage, on a retenu les conditions suivantes (nullement impératives)
- injection de la résine à 165° avec un débit de 300 cm³/min pour le remplissage du moule ;
- pression d'injection comprise entre X et 17 bars ;
- cuisson à 180° pendant 2 h.

Il est à noter que d'autres défauts peuvent être introduits dans la même ébauche avant injection de la résine liquide.

Parmi ceux-ci, on peut notamment mentionner la rupture des torons, du tissage qui peut être perçu sur la tomographie. Pour concrétiser de tels défauts à des emplacements prédéterminés de l'aube témoin, il suffit de sectionner certains torons de fibres à des emplacements choisis, par exemple à l'aide de simple ciseaux et d'établir la cartographie de ces coupures. De telles coupures 20 sont illustrées schématiquement à la figure 3. On procède ensuite au moulage de la figure 4.

L'aube témoin 22 obtenue après moulage est illustrée à la figure 5.

## Revendications

1. Procédé de fabrication d'une aube témoin en matériau composite pour étalonnage d'un contrôle radiologique d'aubes semblables, **caractérisé en ce qu'**il consiste à réaliser une ébauche tridimensionnelle (12) tissée en fibres de matériau synthétique, à introduire des éléments en résine (14) à l'état solide à des emplacements prédéterminés de ladite ébauche, à introduire ladite ébauche dans un moule et à injecter de la résine sous pression dans ledit moule pour obtenir ladite aube témoin.

2. Procédé selon la revendication 1, **caractérisé en ce que** les éléments en résine (14) ont une forme sensiblement sphérique.

3. Procédé selon la revendication 2, **caractérisé en ce que** lesdits éléments en résine (14), sphériques, ont des diamètres différents choisis, par exemple, compris entre 2 et 10 mm.

4. Procédé selon l'une des revendications précédentes, **caractérisé en ce qu'**on sectionne (20) certains torons de fibres de ladite ébauche à des emplacements choisis, avant injection de la résine.

## Claims

1. A method of fabricating a test blade of composite material for calibrating X-ray inspection of similar blades, the method being **characterized in that** it consists in making a three-dimensional blank (12) woven out of synthetic material fibers, in inserting elements (14) of resin in the solid state at predetermined locations in said blank, in inserting said blank into a mold, and in injecting resin under pressure into said mold to obtain said test blade.

2. A method according to claim 1, **characterized in that** the resin elements (14) are substantially spherical in shape.

3. A method according to claim 2, **characterized in that** said spherical resin elements (14) have selected different diameters, e.g. lying in the range 2 mm to 10 mm.

4. A method according to any preceding claim, **characterized in that** certain strands of fibers are cut (20) in said blank at selected locations prior to injecting the resin.

## Patentansprüche

1. Verfahren zur Herstellung einer Referenzlaufradschaufel aus Verbundstoff zur Eichung einer radiologischen Kontrolle ähnlicher Laufradschaufeln, **dadurch gekennzeichnet, daß** es darin besteht, einen dreidimensionalen Rohling (12), der aus Kunststoffasern gewebt ist, herzustellen, Harzelemente (14) im festen Zustand an vorbestimmten Stellen des Rohlings einzuführen, den Rohling in eine Form einzuführen und Harz unter Druck in die Form einzuspritzen, um die Referenzlaufradschaufel zu erhalten.

2. Verfahren nach Anspruch 1, **dadurch gekennzeichnet, daß** die Harzelemente (14) im wesentlichen Kugelform haben.

3. Verfahren nach Anspruch 2, **dadurch gekennzeichnet, daß** die kugelförmigen Harzelemente (14), unterschiedliche ausgewählte Durchmesser von beispielsweise zwischen 2 und 10 mm haben.

4. Verfahren nach einem der vorhergehenden Ansprüche, **dadurch gekennzeichnet, daß** gewisse Faserlitzen des Rohlings an ausgewählten Stellen vor dem Einspritzen des Harzes geteilt werden (20).
